(19) Europäisches Patentamt
European Patent Office
Office européen des brevets

(11) Numéro de publication: **0 002 970**
**B1**

(12) **FASCICULE DE BREVET EUROPEEN**

(45) Date de publication du fascicule de brevet: **12.08.81**

(51) Int. Cl.³: **C 22 B 58/00**, C 01 G 15/00

(21) Numéro de dépôt: **78400222.2**

(22) Date de dépôt: **08.12.78**

(54) **Procédé d'extraction du gallium et gallium ainsi récupéré.**

(30) Priorité: **15.12.77 FR 7737785**

(43) Date de publication de la demande:
**11.07.79 Bulletin 79/14**

(45) Mention de la délivrance du brevet:
**12.08.81 Bulletin 81/32**

(84) Etats Contractants Désignés:
**BE CH DE FR GB LU NL SE**

(56) Documents cités:
**AU - A - 448 131**
**FR - A - 952 976**
**FR - A - 2 365 641**
**GB - A - 1 483 115**
**US - A - 3 637 711**

(73) Titulaire: **RHONE-POULENC INDUSTRIES**
**22, avenue Montaigne**
**F-75008 Paris (FR)**

(72) Inventeur: **Helgorsky, Jacques**
**21, rue de la République**
**F-95740 Frepillon (FR)**
Inventeur: **Leveque, Alain**
**8-10, rue Manin**
**F-75019 Paris (FR)**

(74) Mandataire: **Savina, Jacques et al,**
**RHONE POULENC Service Brevets Chimie et Polymères B.P. 753**
**F-75360 Paris Cedex 08 (FR)**

**EP 0 002 970 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé d'extraction du gallium et gallium ainsi récupéré

La présente invention concerne un procédé d'extraction liquide/liquide du gallium contenu dans des solutions aqueuses basiques.

On connaît d'après le brevet anglais n° 1 483 115 un procédé d'extraction du gallium de solutions acides présentant un pH compris entre 1,5 et 5 au moyen d'un agent d'extraction constitué par des acides aliphatiques saturés de formule générale

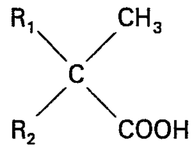

dans laquelle $R_1$ et $R_2$ sont des radicaux alkyl à 3 ou 4 atomes de carbone, telles que les acides "versatic" (marque déposeé par la société SHELL CHEMICALS).

Par ailleurs, on connaît d'après les demandes françaises n° 2 277 897, 2 307 047 et 2 307 882, au nom de la demanderesse, un procédé de récupération du gallium présent dans des solutions aqueuses alcalines par extraction liquide/liquide au moyen d'une phase organique contenant des hydroxyquinoléines substituées. Ce procédé permet d'atteindre d'excellents taux de récupération du gallium.

Il s'est avéré qu'il serait souhaitable de bénéficier d'une cinétique rapide d'extraction du gallium de solution aqueuse basique afin de permettre notamment la production d'importantes quantités de gallium dans des conditions techniques et économiques encore plus intéressantes.

La demanderesse a trouvé que l'adjonction à la phase organique contenant les hydroxyquinoléines comme agent d'extraction de composés organiques comportant au moins une fonction acide carboxylique améliore la vitesse d'extraction du gallium des solutions basiques sans altérer les excellents taux d'extraction de celui-ci.

La présente invention concerne, en effet, un procédé d'extraction liquide/liquide du gallium contenu dans des solutions aqueuses basiques, par mise en contact de la solution aqueuse avec une phase organique contenant principalement un solvant organique, au moins une hydroxyquinoléine substituée, ce procédé étant caractérisé en ce que la phase organique contient en outre au moins un composé organique comportant au moins une fonction acide carboxylique.

Les solutions aqueuses basiques, traitées selon le procédé de l'invention sont celles dans lesquelles la concentration en $OH^{\ominus}$ peut aller jusqu'à 13—14 ions g/l. Ainsi, le procédé de l'invention est particulièrement intéressant pour extraire le gallium contenu dans les lessives d'aluminate de sodium du procédé Bayer de fabrication de l'alumine. La composition de ces lessives correspondant, généralement, à des teneurs en $Na_2O$ comprises entre 100 et 400 g/l et en $Al_2O_3$ de 40 à 150 g/l, les lessives dites "d'attaque" correspondant, généralement, à des teneurs en $Na_2O$ voisines de 300 g/l et en $Al_2O_3$ de 150 g/l, les lessives dites de "décomposition" à des teneurs comprises entre 150 et 200 g/l pour $Na_2O$ et entre 70 et 100 g/l pour $Al_2O_3$.

Les solvants organiques que l'on met en oeuvre selon l'invention sont les diluants utilisés en extraction liquide/liquide, ils peuvent être utilisés seuls ou en mélange. Parmi ceux-ci, on peut citer les composés aliphatiques comme, par exemple, l'heptane et les coupes pétrolières du type kérosène; les composés aromatiques comme, par exemple, le benzène, le toluène, le xylène et les coupes du type Solvesso (marque déposée par la Société Exxon) et, enfin, les dérivés halogénés de ces composés comme, par exemple, le chloroforme et le tétrachlorure de carbone.

Les hydroxyquinoléines substituées sont celles pouvant extraire le gallium par complexation dans les conditions de l'invention, elles doivent, de plus, dans ces conditions être plus solubles dans la phase organique que dans la phase aqueuse.

Les hydroxyquinoléines substituées convenant aux fins de l'invention sont notamment celles de formule générale

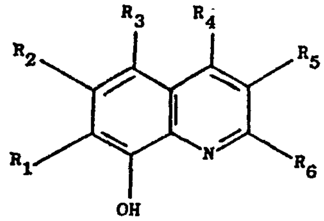

dans laquelle $R_1$, $R_2$, $R_3$, $R_4$, $R_5$, $R_6$, identiques ou différents, sont choisis parmi le groupe constitué par l'hydrogène, les radicaux substitués ou non alkyle, alcényle, cycloaliphatique, aromatique; $R_1$, $R_2$, $R_3$, $R_4$, $R_5$, $R_6$ ne pouvant représenter simultanément H. Parmi ces hydroxyquinoléines substituées, celles

convenant particulièrement bien aux fins de l'invention sont notamment les $\alpha$ alcényl hydroxy-8 quinoléines, les $\beta$ alcényl hydroxy-8 quinoléines et les alkyl hydroxy-8 quinoléines dans lesquelles les autres radicaux Rj=1,2,3,4,5,6 restants représentent un hydrogène ou un radical hydrocarboné.

Les $\alpha$ alcényl hydroxy-8 quinoléines préférées selon l'invention ont pour formule générale

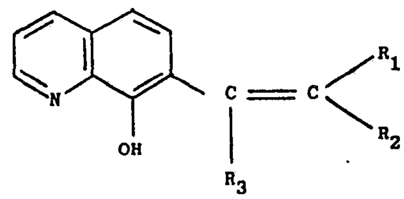

dans laquelle $R_1$, $R_2$, $R_3$ représentent un hydrogène ou un groupement hydrocarboné éventuellement substitué. Parmi celles-ci on utilisera notamment celles de formule générale

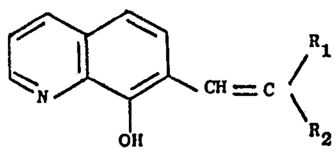

ou

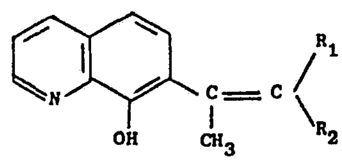

Les $\beta$ alcényl hydroxy-8 quinoléines préférées selon le procédé de l'invention ont pour formule générale

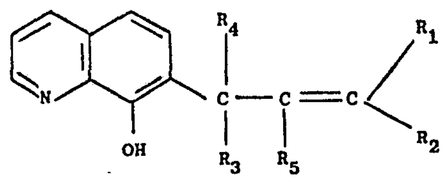

dans laquelle $R_1$, $R_2$, $R_3$, $R_4$, $R_5$ représentent un hydrogène ou un groupement hydrocarboné éventuellement substitué.

Les alkyl hydroxy-8 quinoléines préférées selon l'invention ont pour formule

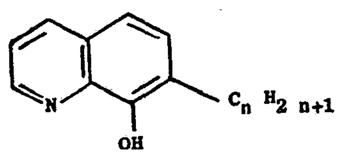

dans laquelle n est compris entre 1 et 20, et, de préférence, entre 5 et 15.

Ces hydroxyquinoléines peuvent être mises en oeuvre selon l'invention seules ou en mélange.

La proportion en hydroxyquinoléine substituée dans la phase organique n'est pas critique et peut varier dans de larges limites. Toutefois, une proportion comprise entre 1 et 50% en volume rapportée à la phase organique convient généralement, une proportion comprise entre 6 et 12% étant économiquement favorable.

Les composés organiques comportant au moins une fonction acide carboxylique que l'on peut mettre en oeuvre selon l'invention sont ceux utilisables en extraction liquide/liquide; ils peuvent être aliphatiques ou aromatiques, à chaînes linéaires ou ramifiées, et, éventuellement, substitués ou non, ils peuvent être utilisés seuls ou en mélange. Ils doivent, de plus, dans les conditions de mise en oeuvre de l'invention, être plus solubles dans la phase organique que dans la phase aqueuse.

Parmi ces composés, on peut citer notamment:

— les acides aliphatiques dans lesquels les radicaux hydrocarbonés ont de 3 à 20 atomes de carbone, et, en particulier, les acides butanoïque, valérique, octoïque, caproïque, caprylique, caprique, pélargonique, laurique;
— les acides aliphatiques, aromatiques ou cycloaliphatiques halogénés tels que, par exemple, l'acide alpha bromolaurique;
— les acides naphténiques ayant la formule générale

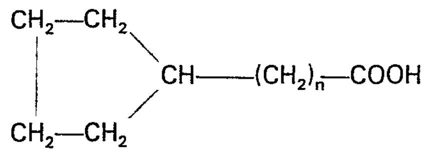

dans laquelle n est ⩾ 1;

— les fractions lourdes acides comportant notamment des mélanges d'acides en $C_5$—$C_6$, $C_7$—$C_9$, $C_9$—$C_{11}$, $C_{10}$—$C_{16}$, $C_{10}$—$C_{13}$, $C_{12}$—$C_{16}$;

— les diacides de formule générale

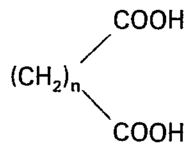

dans laquelle n est ⩾ 1;

— les acides thioglycoliques de formule générale R—S—$CH_2$—COOH dans laquelle R est un radical aliphatique, cycloaliphatique, aromatique ou une combinaison de ceux-ci;

— les acides "Versatic" (marque déposée par la Société Shell Chemicals) ayant pour formule générale

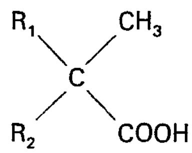

dans laquelle $R_1$ et $R_2$ sont des radicaux hydrocarbonés substitués ou non, et, en particulier, l'acide "Versatic 911" (marque déposée par Shell Chemicals) qui est un mélange d'acides monocarboxyliques tertiaires saturés pour lesquels $R_1$ et $R_2$ sont des radicaux hydrocarbonés dont la somme des atomes de carbone des deux radicaux est égale à 6, 7 ou 8 et qui est fabriqué par synthèse oxo à partir d'oléfines en $C_9$—$C_{11}$; l'acide "Versatic 15/19" (marque déposée par Shell Chemicals) dans lequel $R_1$ est un radical hexyle et $R_2$ un radical octyle; l'acide "Versatic 10" (marque déposée par Shell Chemicals) dérivé du procédé Shell de carboxylation d'oléfine en $C_9$ et pour lequel $R_1$ et $R_2$ sont des radicaux hydrocarbonés dont la somme des atomes de carbone des deux radicaux est égale à 7.

La proportion en composé organique comportant au moins une fonction acide carboxylique dans la phase organique n'est pas critique et peut varier dans de larges limites. Toutefois, une proportion inférieure à 20% en volume rapportée à la phase organique convient généralement; une proportion comprise entre 0 (exclu) et 10% étant favorable économiquement.

Ainsi qu'il est bien connu dans le domaine de l'extraction liquide/liquide, il peut être avantageux d'ajouter dans la phase organique, selon le procédé de l'invention, divers agents modifieurs. Parmi ceux-ci, on peut citer les corps à fonction alcool, en particulier, les alcools lourds dont le nombre d'atomes de carbone est compris entre 4 et 15, et les phénols lourds ainsi que divers autres composés solvatants, tels que certains esters phosphoriques comme le tri-butyl phosphate, les oxydes de phosphine et les sulfoxydes.

La température de mise en oeuvre de l'invention n'est pas un facteur critique. C'est même un des avantages procuré par le procédé de l'invention par rapport à la technique antérieure que de permettre d'opérer l'extraction à n'importe quelle température. Ainsi, généralement, une température d'extraction comprise entre 10°C et 50°C permet d'obtenir des taux d'extraction du gallium très satisfaisants.

La nature de l'atmosphère dans laquelle est mis en oeuvre le procédé de l'invention n'est pas critique. Toutefois, si l'on veus éviter une certaine dégradation de l'agent d'extraction par oxydation au cours du temps, il est avantageux, selon le procédé de l'invention, d'opérer l'extraction en atmosphère inerte. L'atmosphère inerte pouvant être constituée en particulier par une atmosphère d'argon ou d'azote.

Le procédé de l'invention permet la récupération du gallium de solutions aqueuses basiques lorsque l'étape d'extraction proprement dite est suivie d'une étape de régénération de la phase organique au moyen d'acides forts. Dans ce cas, après l'étape d'extraction, on opère la séparation de la phase organique de la phase aqueuse, au moins une fois, d'une part, on met en contact la phase organique avec une solution d'acide fort, et d'autre part, on sépare la phase organique restante de la phase aqueuse; le gallium étant ensuite récupéré de la phase aqueuse. Les acides forts que l'on peut mettre en oeuvre sont, de préférence, choisis parmi le groupe comprenant: l'acide chlorhydrique, l'acide sulfurique, l'acide nitrique, l'acide bromhydrique et l'acide perchlorique.

Dans le cas particulier où la solution aqueuse basique est une lessive d'aluminate de sodium du

procédé Bayer de fabrication de l'alumine, il s'avère qu'une certaine quantité d'aluminium et de sodium, transfère notamment, en plus du gallium, de la lessive dans la phase organique au cours de l'étape d'extraction selon l'invention. L'étape de régénération subséquente permet alors, notamment selon différentes variantes, de récupérer un gallium plus ou moins purifié.

Selon une première variante, après avoir séparé la phase organique de la phase aqueuse, on met en contact la phase organique avec une solution d'acide fort, on sépare la phase aqueuse de la phase organique et on récupère le gallium de la phase aqueuse. La concentration de la solution acide utilisée dépend en particulier de la proportion d'hydroxyquinoléine substituée mise en oeuvre dans la phase organique. Pour les proportions préférées d'hydroxyquinoléine lorsque l'on met en oeuvre des solutions d'acide sulfurique ou nitrique ou perchlorique, leur concentration doit, de préférence, être supérieure à 1,2 M; lorsque l'on met en oeuvre des solutions d'acide chlorhydrique ou bromhydrique, leur concentration doit, de préférence, être comprise entre 1,2 M et 2,2 M.

Selon une deuxième variante, après avoir séparé la phase organique de la phase aqueuse, on met en contact la phase organique avec une première solution aqueuse diluée d'un acide pour transférer le sodium et l'aluminium de la phase organique dans la phase aqueuse, le gallium restant dans la phase organique, et, après séparation des phases organique et aqueuse, on met en contact la phase organique restante avec une deuxième solution aqueuse d'acide plus concentrée afin de transférer le gallium de la phase organique dans la phase aqueuse, le gallium étant ensuite séparé de la phase aqueuse. La concentration des solutions acides utilisées dépend, en particulier, de la proportion d'hydroxyquinoléine substituée mise en oeuvre dans la phase organique. Pour les proportions préférées d'hydroxyquinoléine, la concentration de la première solution aqueuse d'acide est, de préférence, comprise entre 0,2 M et 0,7 M; celle de la deuxième solution étant, de préférence, supérieure à 1,2 M, lorsque l'on met en oeuvre des solutions d'acide sulfurique ou nitrique ou perchlorique, et, de préférence, comprise entre 1,2 M et 2,2 M, lorsque l'on met en oeuvre des solutions d'acide chlorhydrique ou bromhydrique.

Selon une troisième variante, après avoir séparé la phase organique de la phase aqueuse, on met en contact la phase organique avec une première solution aqueuse concentrée d'un acide capable de complexer le gallium sous forme anionique, le gallium restant en solution dans la phase organique tandis que le sodium et l'aluminium passent dans la phase aqueuse, après séparation des phases organique et aqueuse, on met en contact la phase organique restante avec une deuxième solution aqueuse diluée d'acide afin de transférer le gallium de la phase organique dans la phase aqueuse, le gallium étant ensuite séparé de la phase aqueuse; les acides mis en oeuvre dans cette troisième variante, sont, de préférence, les acides chlorhydrique ou bromhydrique. La concentration des solutions acides utilisées dépend en particulier de la proportion d'hydroxyquinoléine substituée mise en oeuvreé dans la phase organique. Pour les proportions préférées d'hydroxyquinoléine, la concentration de la première solution est, de préférence, comprise entre 4 M et 8 M et celle de la deuxième solution comprise entre 1,2 M et 2,2 M.

La procédé selon la présente invention peut être mis en oeuvre dans les dispositifs industriels classiques utilisés en extraction liquide/liquide. La présente invention permet notamment par rapport au procédé traditionnel de réduire la taille des réacteurs de mélange dans des proportions très appréciables en bénéficiant d'un gain de productivité important; il est ainsi possible, en particulier avec un système d'extraction multi-étages d'encombrement réduit fonctionnant à contrecourant, de réaliser l'extraction quasi-totale du gallium de solutions aqueuses basiques.

D'autres avantages de l'invention apparaitront à la lecture des exemples qui vont suivre: ces derniers ne sauraient, en aucune façon, être considérés comme limitant l'invention.

Exemple 1

Une lessive Bayer de composition $Al_2O_3$: 80 g/l; $Na_2O$: 205 g/l; Ga: 225 mg/l est agitée à 26°C avec un volume égal d'une phase organique ayant la composition en volume suivante:

| | | |
|---|---|---|
| — hydroxyquinoléine A | : | 8% |
| — n-décanol | : | 10% |
| — acide Versatic 10 | : | x% |
| — kérosène | : | (82-x)% |

Après séparation des phases, le taux d'extraction du gallium obtenu est donné dans le tableau 1 ci-après en fonction du temps de mélange et de la proportion x d'acide Versatic 10 mise en oeuvre.

TABLEAU 1

| Taux d'extraction du gallium en % | | Temps de Mélange en mn | | | | |
|---|---|---|---|---|---|---|
| | | 2 | 5 | 10 | 20 | 30 |
| x % d'acide Versatic 10 | 0 | | | | 8 | 23 |
| | 1 | 9 | 16 | 24 | 41 | 53 |
| | 2 | 38 | 62 | 76 | 89 | 89 |
| | 5 | 71 | 87 | 89 | 89 | 89 |

Les résultats consignés dans ce tableau montrent l'accroissement considérable de la vitesse d'extraction du gallium procuré par le procédé selon l'invention mettant en oeuvre un composé comportant une fonction acide carboxylique par rapport au procédé traditionnel correspondant à x = 0.

A est une $\beta$ alcényl hydroxy-8 quinoléine de formule

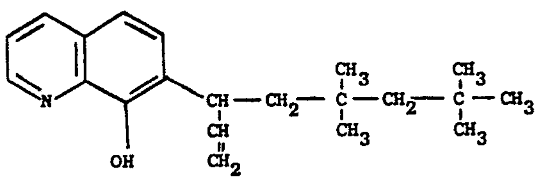

c'est le compose' actif du produit vendu par la Société Ashland Chemidal sous lar marque Kélex 100.

Exemple 2

Cet exemple illustre également l'accroissement, par rapport au procédé traditionnel (P.T.), de la vitesse d'extraction du gallium selon le procédé de l'invention lorsque l'on met en oeuvre une autre hydroxyquinoléine que celle de l'exemple 1.

Une lessive Bayer de même composition que celle donnée dans l'exemple 1 est agitée à 50°C avec un volume égal d'une phase organique ayant la composition en volume suivante:

| | | |
|---|---|---|
| —hydroxyquinoléine B | : | 8% |
| — n-décanol | : | 10% |
| — acide Versatic 10 | : | x% |
| — kérosène | : | (82-x)% |

Après séparation des phases, le taux d'extraction du gallium obtenu est donné dans le Tableau 2 ci-après en fonction du temps de mélange:

TABLEAU 2

| Taux d'extraction du gallium en % | | Temps de Mélange en mn | | | | |
|---|---|---|---|---|---|---|
| | | 2 | 5 | 10 | 30 | 60 |
| x % d'acide | x = 0 (P. T.) | 14 | 31 | 50 | 82 | 90 |
| | x = 1 | 45 | 74 | 87 | 90 | 90 |

B est une alkylhyroxyquinoléine de formule

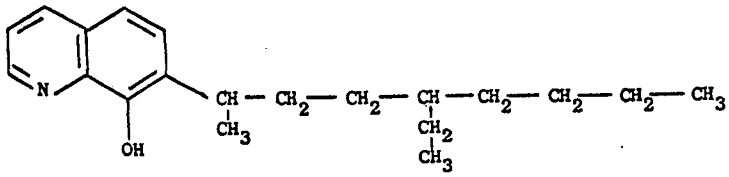

Exemple 3

Cet exemple illustre également l'accroissement par rapport au procédé traditionnel, de la vitesse d'extraction du gallium selon le procédé de l'invention lorsque l'on met en oeuvre les acides octoïque et naphténique, ainsi qu'une autre hydroxyquinoléine.

Une lessive Bayer de même composition que celle donnée dans l'Exemple 1 est agitée à 30°C avec un volume égal d'une phase organique ayant la composition en volume suivante:

— hydroxyquinoléine C : 10%

— n-décanol : 10%

acide octoïque)
ou)- : x%
— naphténique)

— kérosène : (80-x)%

Après séparation des phases, le taux d'extraction du gallium obtenu est donné dans le Tableau 3 ci-après en fonction du temps de mélange.

TABLEAU 3

| Taux d'extraction du gallium en % | | Temps de mélange en mn | | | | |
|---|---|---|---|---|---|---|
| | | 2 | 5 | 10 | 20 | 30 |
| x % d'acide | 0 | | | 18 | | 33 |
| | 4 % Acide Octoïque | 78 | 86 | 86 | 86 | 86 |
| | 8 % Acide Naphténique | 27 | 47 | 68 | 78 | 86 |

Exemple 4

C est une $\alpha$ alcényl hydroxyquinoléine de formule

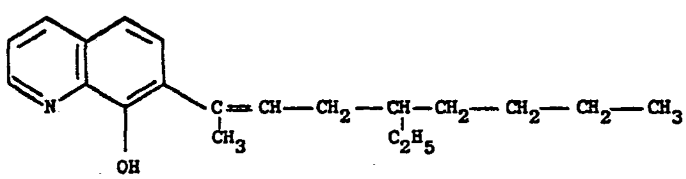

Cet exemple illustre l'un des avantages supplémentaires procuré par le procédé de l'invention (P.I.) par rapport au procédé traditionnel sans addition de composé organique à fonction carboxylique (P.T.), avantage que réside dans la possibilité de réaliser la phase d'extraction du gallium à n'importe

quelle température et, en particulier, à la température ambiante en obtenant rapidement d'excellents taux de récupération de celui-ci.

Une lessive Bayer de même composition que celle donnée dans l'Exemple 1 est agitée à 16°C ou à 50°C avec un volume égal d'une phase organique ayant la composition en volume suivante:

| | | |
|---|---|---|
| — hydroxyquinoléine A | : | 8% |
| — n-décanol | : | 10% |
| — acide Versatic 10 | : | 5% |
| — kérosène | : | 77% |

Après séparation des phases, le taux d'extraction du gallium obtenu est donné dans le Tableau 4 ci-après en fonction du temps de mélange et de la température.

L'hydroxyquinoléine A est celle qui a été décrite dans l'Exemple 1.

TABLEAU 4

| Taux d'extraction du gallium en % | | | Temps de Mélange en mn | | | |
|---|---|---|---|---|---|---|
| | | | 1 | 2 | 5 | 10 |
| Température en °C | 26° C | P.I. | 50 | 71 | 87 | 89 |
| | | P.T. | | | | 8 |
| | 50° C | P.I. | 80 | 88 | 89 | 89 |
| | | P.T. | | | 14 | 23 |

Il apparait donc clairement que, quelque soit la température d'extraction, le taux maximum d'extraction du gallium est atteint très rapidement selon le procédé de l'invention, contrairement au procédé traditionnel qui nécessite à la fois une température d'extraction élevée et un temps de mélange important.

**Revendications**

1. Procédé d'extraction liquide/liquide du gallium contenu dans des solutions aqueuses basiques par mise en contact de la solution aqueuse avec une phase organique contenant principalement un solvant organique, au moins une hydroxyquinoléine substituée, caractérisé en ce que la phase organique contient en outre au moins un composé organique comportant au moins une fonction acide carboxylique.

2. Procédé selon la revendication 1, caractérisé en ce que le composé organique comportant au moins une fonction acide carboxylique est plus soluble dans la phase organique dans la phase aqueuse et est choisi parmi les composés aliphatiques ou aromatiques à chaînes linéaires ou ramifiées.

3. Procédé selon la revendication 2, caractérisé en ce que le composé organique comportant au moins une fonction acide carboxylique est choisi parmi le groupe comportant:

— les acides aliphatiques dans lesquels les radicaux hydrocarbonés ont de 3 à 20 atomes de carbone,

— les acides aliphatiques, aromatiques ou cycloaliphatiques halogénés,

— les acides naphténiques de formule générale

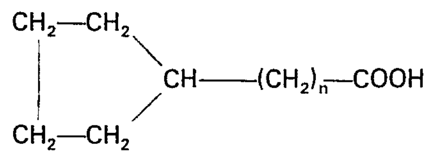

dans laquelle n ⩾ 1,

— les fractions lourdes acides comportant notamment des mélanges d'acides en $C_5$—$C_6$, $C_7$—$C_9$, $C_9$—$C_{11}$, $C_{10}$—$C_{16}$, $C_{10}$—$C_{13}$, $C_{12}$—$C_{16}$,

— les diacides de formule générale

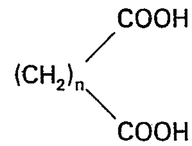

dans laquelle n ⩾ 1,

— les acides thioglycoliques de formule générale

$$R—S—CH_2—COOH$$

dans laquelle R est un radical aliphatique, cycloaliphatique, aromatique ou une combinaison de ceux-ci,

— au moins un acide de formule générale

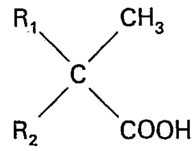

dans laquelle $R_1$ et $R_2$ sont des radicaux hydrocarbonés.

4. Procédé selon la revendication 3, caractérisé en ce que le composé organique comportant au moins une fonction acide carboxylique est choisi parmi le groupe comportant:

— les acides butanoïque, valérique, octoïque, caproïque, caprylique, caprique, pélargonique, laurique,

— l'acide alpha bromolaurique,

— l'acide naphténique,

— un acide de formule générale

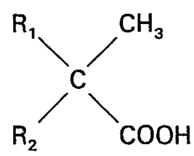

dans laquelle, soit $R_1$ est un radical hexyle et $R_2$ un radical octyle, soit $R_1$ et $R_2$ sont des radicaux hydrocarbonés dont la somme des atomes de carbone des deux radicaux est égale à 7 ou un mélange d'acides de même formule générale dans laquelle $R_1$ et $R_2$ sont des radicaux hydrocarbonés dont la somme des atomes de carbone des deux radicaux est égale à 6, 7 ou 8.

5. Procédé selon la revendication 1, caractérisé en ce que la proportion en composé organique comportant au moins une fonction acide carboxylique est inférieure à 20% en volume rapportée à la phase organique.

6. Procédé selon la revendication 5, caractérisé en ce que la proportion est inférieure à 10% en volume rapportée à la phase organique.

**Claims**

1. A method of liquid/liquid extraction of gallium contained in basic aqueous solutions, by bringing the aqueous solution into contact with an organic base primarily containing an organic solvent and at least one substituted hydroxyquinoline, characterised in that the organic phase further contains at least one organic compound comprising at least one carboxylic acid group.

2. A method according to claim 1 characterised in that the organic compound comprising at least one carboxylic acid group is more soluble in the organic phase than in the aqueous phase and is selected from straight or branched chain aliphatic or aromatic compounds.

3. A method according to claim 2 characterised in that the organic compound comprising at least one carboxylic acid group is selected from the group comprising:

— aliphatic acids in which the hydrocarbon radicals have from 3 to 20 carbon atoms,

— halogenated aliphatic, aromatic or cycloaliphatic acids,

— naphthenic acids having the general formula:

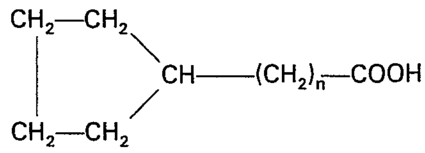

wherein $n \geqslant 1$,

— heavy acid fractions comprising in particular mixtures of $C_5$—$C_6$, $C_7$—$C_9$, $C_9$—$C_{11}$, $C_{10}$—$C_{16}$, $C_{10}$—$C_{13}$ and $C_{12}$—$C_{16}$ acids,

— diacids having the general formula:

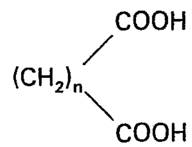

wherein $n \geqslant 1$,

— thioglycolic acids having the general formula:

$$R—S—CH_2—COOH$$

wherein R is an aliphatic, cycloaliphatic or aromatic radical or a combination thereof, and

— at least one acid having the general formula:

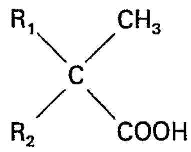

wherein $R_1$ and $R_2$ are hydrocarbon radicals.

4. A method according to claim 3 characterised in that the organic compound comprising at least one carboxylic acid group is selected from the group comprising:

— butanoic, valeric, octoic, caproic, caprylic, capric, pelargonic, and lauric acids,

— alpha-bromolauric acid,

— napthenic acid, and

— an acid having the general formula:

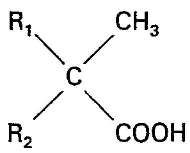

wherein either $R_1$ is a hexyl radical and $R_2$ is an octyl radical, or $R_1$ and $R_2$ are hydrocarbon radicals wherein the sum of the carbon atoms of the two radicals is equal to 7, or a mixture of acids having the same general formula in which $R_1$ and $R_2$ are hydrocarbon radicals wherein the sum of the carbon atoms of the two radicals is equal to 6, 7 or 8.

5. A method according to claim 1 characterised in that the proportion of organic compound comprising at least one carboxylic acid group is less than 20% by volume with respect to the organic phase.

6. A method according to claim 5 characterised in that the proportion is less than 10% by volume with respect to the organic phase.

## Patentansprüche

1. Verfahren zur flüssig/flüssig-Extraktion von in wässrigen basischen Lösungen enthaltenen Gallium bei dem die wässrige Lösung mit einer organischen Phase in Kontakt gebracht wird, die hauptsächlich ein organisches Lösungsmittel und mindestens ein substituiertes Hydroxychinolin enthält, dadurch gekennzeichnet, daß die organische Phase zusätzlich mindestens eine organische Verbindung mit mindestens einer Carbonsäurefunktion enthält.

2. Verfahren nach Anspruch 1, dadurch gekennzeichnet, daß die organische Verbindung mit mindestens einer Carbonsäurefunktion in der organischen Phase leichter löslich ist als in der wässrigen Phase und aus den aliphatischen oder aromatischen Verbindungen mit geraden oder vernetzten Ketten gewählt ist.

3. Verfahren nach Anspruch 2, dadurch gekennzeichnet, daß die organische Verbindung mit mindestens einer Carbonsäurefunktion aus der folgenden Gruppe gewählt ist:

— die aliphatischen Säuren, in denen die Kohlenwasserstoffreste 3 bis 20 Kohlenstoffatome haben,

— die halogenierten aliphatischen, aromatischen oder cycloaliphatischen Säuren

— die Naphtensäuren der allgemeinen Formel

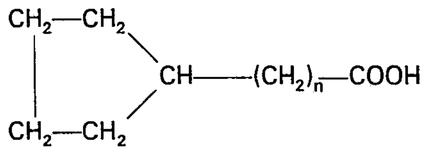

in der n $\geqslant$ 1 ist,

— die schweren Säurefraktionen, die insbesondere Mischungen der Säuren $C_5$—$C_6$, $C_7$—$C_9$, $C_9$—$C_{11}$, $C_{10}$—$C_{16}$, $C_{10}$—$C_{13}$ und $C_{12}$—$C_{16}$ enthalten,

— die Dicarbonsäuren der allgemeinen Formel

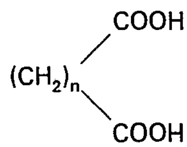

in der n $\geqslant$ 1 ist

— die Thioglykolsäuren der allgemeinen Formel

$$R—S—CH_2—COOH$$

in der R ein aliphatischer, cycloaliphatischer, aromatischer Rest der eine Kombination dieser ist,

— mindestens eine Säure der allgemeinen Formel

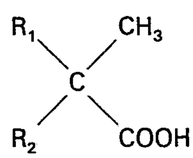

in der $R_1$ und $R_2$ Kohlenwasserstoffradikale sind.

4. Verfahren nach Anspruch 3, dadurch gekennzeichnet, daß die organische Verbindung mit mindestens einer Carbonsäurefunktion aus der folgenden Gruppe gewählt ist:

— Buttersäure, Valeriansäure, Octoylsäure (Octansäure), Capronsäure, Caprylsäure, Caprinsäure, Pelargonsäure, Laurinsäure,

— $\alpha$-Bromlaurinsäure,

— Naphtensäure,

— eine Säure der allgemeinen Formel

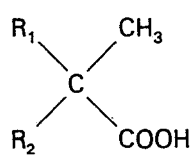

in der entweder $R_1$ ein Hexylrest und $R_2$ ein Octylrest ist oder $R_1$ und $R_2$ Kohlenwasserstoffreste sind, wobei die Summe der Kohlenstoffatome dieser beiden Reste gleich 7 ist, oder eine Mischung von Säuren der selben allgemeinen Formel in der $R_1$ und $R_2$ Kohlenwasserstoffreste sind, wobei die Summe der Kohlenstoffatome dieser beiden Radikale gleich 6, 7 oder 8 ist.

5. Verfahren nach Anspruch 1, dadurch gekennzeichnet, daß der Anteil der organischen Verbindung mit mindestens einer Carbonsäurefunktion kleiner 20 Volumen-%, bezogen auf die organische Phase ist.

6. Verfahren nach Anspruch 5, dadurch gekennzeichnet, daß der Anteil kleiner als 10 Volumenprozent, bezogen auf die organische Phase, ist.